# EUROPEAN PATENT APPLICATION

(11) **EP 1 892 788 A1**
(43) Date of publication of application: **27.02.2008**
(21) Application number: 07253362.3
(22) Date of filing: 24.08.2007
(51) Int. Cl.: H01M 10/04, H01M 10/34, H01M 10/36, H01M 4/04

(54) **All-solid battery element**

(30) Priority: 25.08.2006 JP 2006229788; 19.07.2007 JP 2007194302
(71) Applicant: NGK Insulators, Ltd., Nagoya-shi, Aichi 467-8530 (JP)
(72) Inventor: Yoshida, Toshihiro, NGK Insulators, Ltd., Nagoya City, Aichi-ken 467-8530 (JP); Katsukawa, Hiroyuki, NGK Insulators, Ltd., Nagoya City, Aichi-ken 467-8530 (JP); Takahashi, Fumitake, NGK Insulators, Ltd., Nagoya City, Aichi-ken 467-8530 (JP)
(74) Representative: Paget, Hugh Charles Edward

(57) **Abstract**

The all-solid battery element of the invention is designed to simultaneously satisfy the increased contact area of electrodes with an electrolyte layer and the decreased thickness of the electrolyte layer. The all-solid battery element of the invention has at least one unit cell. The unit cell includes: a cathode having a cathode active material; an anode having an anode active material; and a solid electrolyte layer that is interposed between and is in contact with both the cathode and the anode. In the at least one unit cell, the solid electrolyte layer has a specific array structure of arranging at least part of the cathode and at least part of the anode in an alternate manner or in a zigzag manner.

## Description

### Technical Field

The present invention relates to an all-solid battery element and a manufacturing method of the same.

### Background Art

With advance of portable devices including personal computers and cell phones, there is a large demand for batteries as the power source. In the batteries for such applications, an electrolytic solution or a liquid electrolyte, for example, an organic solvent, is generally used as the medium for ion movement. In the battery including the electrolytic solution, there is always a potential for leakage of the electrolytic solution. Development of all-solid battery elements free of this problem has been advanced. The all-solid battery element has all the constituents made of solid materials including a solid electrolyte, in place of the liquid electrolyte. The all-solid battery element having the solid electrolyte is free from the problem of inflammable -causing leakage of the organic solvent and has the lower potential for corrosion-induced deterioration of the cell performances. One proposed structure of an all-solid lithium secondary battery uses a lithium ion-conductive electrolyte, such as Li₂S-SiS₂-Li₃PO₄, as the solid electrolyte (Japanese Patent Laid-Open Gazette No. H05-205741).

The all-solid battery element has the poorer output characteristics and charge discharge cycle characteristics and thereby the shorter battery life, compared with conventional batteries containing liquid electrolytes. In order to eliminate these drawbacks and attain the high-current output and the improved charge discharge cycle characteristics, one proposed structure of the all-solid battery element has an inorganic oxide layer that is made of the same material as that of a solid electrolyte layer and is located between electrode active materials (Japanese Patent Laid-Open Gazette No. 2000-311710). There is another proposed technique adopted in a secondary battery to inject a gel electrolyte between a cathode active material and an anode active material having a large number of rod-like projections protruded toward opposed electrodes (B. Dunn et al., Chem. Rev., 104, 4463 (2004)).

### Summary of the Invention

The all-solid battery element of the proposed structure disclosed in Japanese Patent Laid-Open Gazette No. 2000-311710 still has some room for improvement with regard to the output characteristics and the charge discharge cycle characteristics. The increased contact area of the respective electrode active materials with the electrolyte layer lowers the internal impedance, while the reduced thickness of the electrolyte layer enhances the ion conductivity. The reduced thickness of the electrolyte layer in combination with the rough or porous interfaces between the electrode active materials and the electrolyte layer for the increased contact area lowers the strength and leads to the occurrence of cracks. The occurrence of cracks may cause a local short circuit of the cathode with the anode. The prior art techniques for reducing the thickness of the electrolyte layer and increasing the contact area tend to undesirably complicate the overall structure and lower the degree of freedom in electrical connection between multiple unit cells. The method proposed by B.Dunn et al. is not intended to reduce the thickness of the electrolyte layer and enhance the ion conductivity.

One aspect of the all-solid battery element of the invention is required to simultaneously satisfy the increased contact area of respective electrodes with an electrolyte layer and the reduced thickness of the electrolyte layer interposed between the respective electrodes. Another aspect of the all-solid battery element of the invention is required to have an electrolyte layer of a desired arrangement without complicating the overall structure. Still another aspect of the all-solid battery element of the invention is required to have electrolyte layers of a desired arrangement and increase the degree of freedom in electrical connection between unit cells. Still another aspect of the all-solid battery element of the invention is required to prevent a local short circuit due to cracks and decrease the internal impedance.

As the results of the intensive studies on the array structure of the cathode, the anode, and the solid electrolyte layer, the inventors have eventually achieved the above requirements by a specific array structure of interposing a solid electrolyte layer between a cathode and an anode and arranging cathode parts and anode parts in an alternate manner or in a zigzag manner and have completed the present invention. The all-solid battery element of the invention has the configurations described below.

According to one aspect, the invention is directed to an all-solid battery element having at least one unit cell. The unit cell includes: a cathode having a cathode active material; an anode having an anode active maternal; and a solid electrolyte layer that is in contact with both the cathode and the anode. In the at least one unit cell, the solid electrolyte layer has a specific array structure of arranging at least part of the cathode and at least part of the anode in an alternate manner or in a zigzag manner. The solid electrolyte layer has cavities for receiving the at least part of the cathode and the at least part of the anode, in order to allow formation of a specific array structure of arranging the at least part of the cathode and the at least part of the anode in an alternate manner.

In one preferable embodiment of the all-solid battery element of the invention, the solid electrolyte layer has the cavities, in order to allow formation of a specific band pattern array structure of arranging the at least part of the cathode and the at least part of the anode in an alternate manner and parallel to each other.

In another preferable embodiment of the all-solid battery element of the invention, the solid electrolyte layer has the cavities, in order to allow formation of a specific zigzag pattern array structure of arranging the at least part of the cathode and the at least part of the anode in a zigzag pattern respectively. In the all-solid battery element of this embodiment, the solid electrolyte layer may have the cavities, in order to allow formation of a specific matrix array structure of arranging the at least part of the cathode and the at least part of the anode in a checkered pattern and as a matrix on the whole.

In still another preferable embodiment of the all-solid battery element of the invention, the cathode has multiple cathode parts forming the specific array structure and a cathode layer, and the anode has multiple anode parts forming the specific array structure and an anode layer. The cathode layer and the anode layer are arranged to face each other across the solid electrolyte layer. In the all-solid battery element of the invention, it is preferable that at least either of the cathode and the anode has a hollow space. It is also preferable that the cathode and the anode have different levels on an end face of the solid electrolyte layer.

In one preferable application of the all-solid battery element of the invention, two or a greater number of the unit cells are laminated to form a cell laminate. The cell laminate has the at least part of the cathode and the at least part of the anode, which form the specific array structure and are arranged in an alternate manner or in a zigzag manner respectively in a laminating direction of the respective unit cells. In the all-solid battery element of this application, the two or more unit cells may be laminated such that at least either of the cathodes and the anodes have plane symmetry across a collector in the laminating direction of the unit cells.
According to another aspect, the invention is directed to a solid electrolyte for an all-solid battery element having a cathode and an anode. The solid electrolyte has cavities for receiving at least part of the cathode and at least part of the anode, in order to allow formation of a specific array structure of arranging the at least part of the cathode and the at least part of the anode in an alternate manner.

### Brief Description of the Drawings

Fig. 1A and Fig. 1B schematically illustrate the structure of an all-solid battery element in a first embodiment of the invention;
Fig. 2A and Fig. 2B show a laminated all-solid battery element in the first embodiment;
Fig. 3 shows a manufacturing process of the all-solid battery element in the first embodiment;
Fig. 4 shows the manufacturing process of the all-solid battery element in the first embodiment;
Fig. 5 shows the manufacturing process of the all-solid battery element in the first embodiment;
Fig. 6 shows the manufacturing process of the all-solid battery element in the first embodiment;
Fig. 7 shows a modified manufacturing process of the all-solid battery element in the first embodiment;
Fig. 8A and Fig. 8B schematically illustrate the structure of an all-solid battery element in a second embodiment of the invention;
Fig. 9A and Fig. 9B show an array structure and a laminated structure of the all solid battery element in the second embodiment respectively;
Fig. 10 shows a manufacturing process of the all-solid battery element in the second embodiment;
Fig. 11A and Fig.11B show the manufacturing process of the all-solid battery element in the second embodiment, seen in Fig. 11A from a side with exposed cathode parts 222 and seen in Fig. 11B from a side with exposed anode parts 242;
Fig. 12 shows the manufacturing process of the all-solid battery element in the second embodiment;
Fig. 13A and Fig. 13B schematically illustrate the structure of an all-solid battery element in a third embodiment of the invention; and
Fig. 14 shows a multilevel structure of electrodes on an end face of a solid electrolyte layer.

### Best Modes of Carrying Out the Invention

The all-solid battery element of the invention has at least one unit cell. The unit cell includes: a cathode having a cathode active material; an anode having an anode active material; and a solid electrolyte layer that is in contact with both the cathode and the anode. In the at least one unit cell, the solid electrolyte layer has a specific array structure of arranging at least part of the cathode and at least part of the anode in an alternate manner or in a zigzag manner. Namely the solid electrolyte layer has cavities for receiving the at least part of the cathode and the at least part of the anode, in order to allow formation of a specific array structure of arranging the at least part of the cathode and the at least part of the anode in an alternate manner.

In the all-solid battery element of the invention, the cathode parts and the anode parts are arranged in an alternate manner or in a zigzag manner in one solid electrolyte layer to form the specific array structure. This arrangement readily satisfies both the increased contact area of the respective electrodes with the solid electrolyte layer and the decreased thickness of the solid electrolyte layer interposed between the two electrodes. The all-solid battery element accordingly has the reduced total thickness, the resulting enhanced output, and the low internal resistance. In secondary cells, the increased contact area decreases the current value per unit area and lowers the load applied to the respective electrodes in the course of charging and discharging. This desirably enhances the cycle characteristics of the secondary batteries. The following description sequentially regards the detailed structures of the cathode, the anode, and the solid electrolyte layer, the characteristic structure of the all-solid battery element, and the manufacturing method of the all-solid battery element.

### (Cathode Active Material and Cathode)

Various metal oxides and metal sulfides are usable as the cathode active material. Application of metal oxides for the cathode active material enables the secondary battery to be sintered in an oxygen atmosphere. The cathode active material may be one or a combination selected among manganese dioxide (MnO₂), iron oxides, copper oxides, nickel oxides, lithium manganese composite oxides (for example, LiₓMn₂O₄ and LiₓMnO₂), lithium nickel composite oxides (for example, LiₓNiO₂), lithium cobalt composite oxides (LiₓCoO₂), lithium nickel cobalt composite oxides (for example, LiNi_{1-y}Co_{y}O₂), lithium manganese cobalt composite oxides (for example, LiMn_{y}Co_{1-y}O₂), spinel-type lithium manganese nickel composite oxides (LiₓMn_{2-y}Ni_{y}O₄), lithium phosphorus oxides of the olivine structure (for example, LiₓFePO₄, LiₓFe_{1-y}Mn_{y}PO₄, and LiₓCoPO₄), lithium phosphorus oxides of the NASICON (Na super ionic conductor) structure (for example, LiₓV₂(PO₄)₃), iron sulfate (Fe₂(SO₄)₃), and vanadium oxides (for example, V₂O₅). In these chemical formulae, x and y are preferably in a range of 0 to 1.

The cathode may further include a conductive additive, a binder, and a solid electrolyte (described later) according to the requirements, in addition to the cathode active material. Typical examples of the conductive additive include acetylene black, carbon black, graphite, various carbon fibers, and carbon nanotubes. Typical examples of the binder include polyvinylidene fluoride (PVDF), SBR, and polyimides.

### (Anode Active Material and Anode)

Available materials for the anode active material include simple metals, carbons, metal compounds, metal oxides, Li metal compounds, Li metal oxides (including lithium transition metal composite oxides), boron-added carbons, graphite, and compounds of the NASICON structure. One or a combination of such materials may be used for the anode active material. The available carbons are conventionally known carbon materials, for example, graphite carbon, hard carbon, and soft carbon. A preferable example of the simple metal is lithium (Li). Typical examples of the metal compound include LiAl, LiZn, Li₃Bi, Li₃Cd, Li₃Sd, Li₄Si, Li_{4.4}Pb, Li_{4.4}Sn, and Li_{0.17}C(LiC₆). Typical examples of the metal oxide include SnO, SnO₂, GeO, GeO₂, In₂O, In₂O₃, PbO, PbOz, Pb₂O₃, Pb₃O₄, Ag₂O, AgO, Ag₂O₃, Sb₂O₃, Sb₂O₄, Sb₂O₅, SiO, ZnO, CoO, NiO, and FeO. Typical examples of the Li metal compound include Li₈FeN₂, Li_{2.6}Co_{0.4}N, and Li_{2.6}Cu_{0.4}N. A preferable example of the Li metal oxide (lithium transition metal composite oxide) is lithium-titanium composite oxides expressed as LiₓTi_{y}O_{z}, such as Li₄Ti₅O₁₂. The boron-added carbon is, for example, boron-added graphite. The anode may further include a conductive additive, a binder, and a solid electrolyte (described later) according to the requirements, in addition to the anode active material. Typical examples of the conductive additive and the binder have already been mentioned in relation to the 'cathode active material and the cathode'. The compounds of the NASICON structure are, for example, lithium phosphate compounds, such as LiₓV₂(PO₄)₃.

### (Solid Electrolyte Layer)

Various solid electrolytes, for example, inorganic solid electrolytes and solid polymer electrolytes, are usable as the solid electrolyte layer according to the application of the all-solid battery clement of the invention. The solid electrolyte preferably contains lithium as the movable ion.

Typical examples of the inorganic solid electrolyte are Li₃PO₄, LiPO₄₋ₓNₓ (0<x≤1) obtained by mixing nitrogen with Li₃PO₄, lithium ion-conductive glass solid electrolytes like Li₂S-SiS₂, Li₂S-P₉S₅, and Li₂S-B₂S₃, and lithium ion-conductive solid electrolytes obtained by doping these glass solid with a lithium halide like LiI or a lithium compound like Li₃PO₄. Especially preferable are titanium oxide solid electrolytes containing lithium, titanium, and oxygen, for example, LiₓLa_{y}TiO₃ (0<x<1, 0<y<1) and phosphates of the NASICUN structure, for example, Li₁+AlₓTi₂₋ₓ(PO₄)₃ (0<x<1), since these compounds exert the stable performances in the sintering process in the oxygen atmosphere.

Conventionally known solid polymer electrolytes are usable as the solid polymer electrolyte of the invention. The solid polymer electrolyte of the invention may be made of any polymer material having ion conductivity and is, for example, polyethylene oxide (PEO), polypropylene oxide (PPO), and PEO-PPO copolymer. The solid polymer electrolyte includes a lithium salt for the ion conductivity. The lithium salt may be LiBF₄, LiPF₆, LiN(SO₂CF₃)₂, LiN(SO₂C₂F₅)₂, or any combination thereof.

### (Collectors)

Conventionally known materials are used for a cathode collector and an anode collector. Conductive metal oxides are preferably used for the material of the collectors- Typical examples of the conductive material oxides are SnOz, In₂O₃, ZnO, and TiOₓ (0.5≤x≤2). The conductive metal oxide may include a tracing amount (for example, not higher than 10 at.%) of a conductivity-enhanced element, such as Sb, Nb, or Ta. The Cu-Al clad material is preferable for its high thermal durability and long life.

### (External Electrodes)

Any suitable material may be applied to external electrodes; for example, Ag, Ag-Pd alloy, Ni plating, or Cu vapor deposition. The surface of the external electrode may be plated with solder for packaging. The external electrodes may be connected to the respective collectors in any suitable form.

### (First Embodiment)

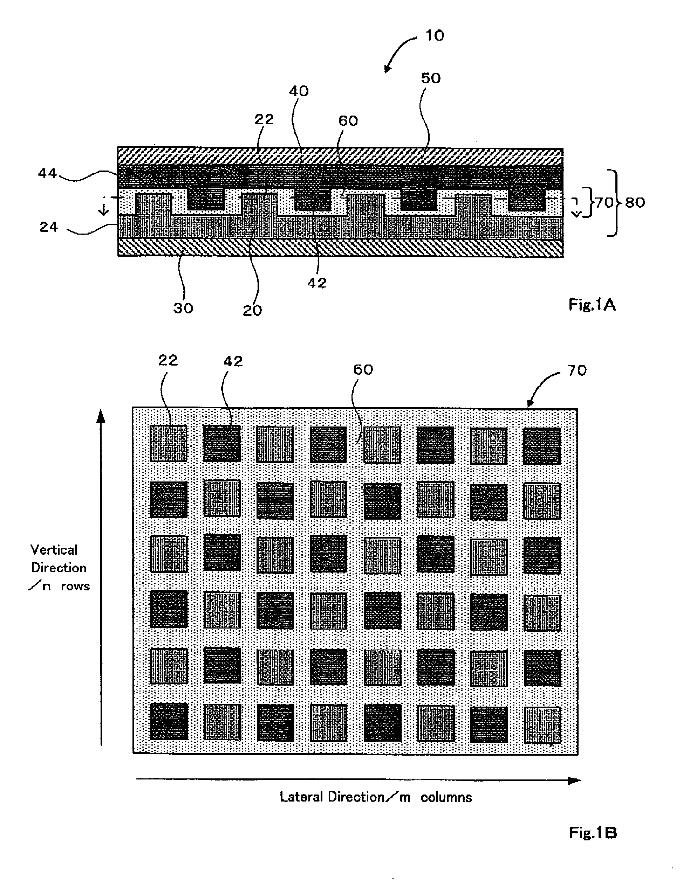

An all-solid battery element 10 in a first embodiment of the invention is described with reference to Figs. 1 through 7. As shown in Fig. 1, the all-solid battery element 10 of the first embodiment has a specific electrode array structure where a cathode 20 and an anode 40 are arranged in a zigzag manner respectively and alternative manner to form a checkered pattern as a whole. The all-solid battery element 10 has a unit cell 80 including the cathode 20, the anode 40, and a solid electrolyte layer 60. The unit cell 80 has at least one electrode-sohd electrolyte assembly 70, which includes cathode parts 22 having a cathode active material, anode parts 42 having an anode active material, and the solid electrolyte layer 60. A cathode collector 30 and an anode collector 50 are provided respectively outside the cathode 20 and the anode 40 of the all-solid battery element 10. The cathode collector 30 and the anode collector 50 are respectively connected to appropriate external electrodes (not shown). The detailed structure of the all-solid battery element 10 is described below.

### (Electrode-Solid Electrolyte Assembly)

### (Solid Electrolyte Layer)

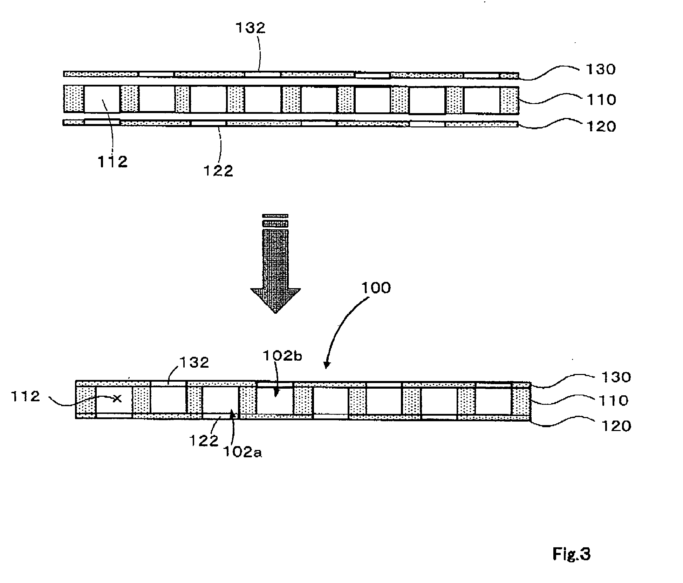

As shown in Fig. 1A, the solid electrolyte layer 60 is in contact with both the cathode 20 and the anode 40. In the structure of this embodiment, the solid electrolyte layer 60 is interposed between the cathode 20 and the anode 40 to fill the space between the cathode 20 and the anode 40 and to be in contact with both the surface of the cathode 20 and the surface of the anode 40. The solid electrolyte layer 60 has cavities (expressed by 102a and 102b in Figs. 3 through 6) for receiving the cathode parts 22 and the anode parts 42 as clearly seen in Fig. 1A. The cavities for receiving the cathode parts 22 are open to the cathode 20 and are arranged in a zigzag manner both in a vertical direction and in a lateral direction as shown in Fig. 1B. The cavities for receiving the anode parts 42 are open to the anode 40 and are arranged in a zigzag manner both in the vertical direction and in the lateral direction to be alternate with the cavities for receiving the cathode parts 22 as shown in Fig. 1B. The cavities of the solid electrolyte layer 60 open to the cathode 20 and open to the anode 40 respectively receive the cathode parts 22 and the anode parts 42 therein. The cross section of the solid electrolyte layer 60 accordingly has a lattice plane surrounding the cathode parts 22 and the anode parts 42 as shown in Fig. 1B. Namely the cathode parts 22 and the anode parts 42 are provided inside the respective lattices defined by the cavities of the solid electrolyte layer 60.
Consequently, the solid electrolyte layer 60 is able to form a specific array structure of arranging the cathode parts 22 and the anode parts 42 in an alternate manner.

### (Structure of Electrodes)

In the structure of the embodiment, the cathode 20 has a cathode layer 24 as a plane extended perpendicular to a laminating direction of the all-solid battery element 10 and multiple cathode parts 22 distributed on the cathode layer 24 to be protruded toward the solid electrolyte layer 60. The anode 40 has an anode layer 44 as a plane extended perpendicular to the laminating direction of the all-solid battery element 10 and multiple anode parts 42 distributed on the anode layer 44 to be protruded toward the solid electrolyte layer 60. The cathode layer 24 and the anode layer 44 are arranged to face each other across the solid electrolyte layer 60.

### (Cathode Parts)

It is preferable that the cathode parts 22 are evenly distributed and arranged in the electrode-solid electrolyte assembly 70. Each of the cathode parts 22 may have any arbitrary shape, for example, a pyramid, a cone, a truncated cone, a truncated pyramid, a cube, a rectangular solid, a circular cylinder, or a prism. The cathode parts 22 may be formed as inclined convexes. By taking into account the formability and the contribution to the thickness reduction of the solid electrolyte layer 60 (described later), the shapes having a top face are preferable; for example, the truncated cone, the truncated pyramid, the cube, the rectangular solid, the circular cylinder, or the prism. Especially preferable shapes are the truncated pyramid, the cube, and the rectangular solid. An isotropic shape having little anisotropy in at least the plane direction, for example, the cube shape shown in Fig. 1 or the prism shape, is suitable for the zigzag pattern of the cathode parts 22 (described later). The cathode 20 including the cathode parts 22 is preferably a substantially solid (or porous) substance.

### (Anode Parts)

Like the cathode parts 22, it is preferable that the anode parts 42 are evenly distributed and arranged in the electrode-solid electrolyte assembly 70. Each of the anode parts 42 may have any arbitrary shape as mentioned above with regard to the cathode part 22. The preferable shape and the preferable size of the cathode parts 22 are also applicable to the anode parts 42. The anode 40 including the anode parts 42 is also preferably a substantially solid (or porous) substance.

### (Electrode Array Structure)

The cathode parts 22 and the anode parts 42 form a specific array structure in the solid electrolyte layer 60. In the all-solid battery element 10 of the embodiment, the solid electrolyte layer 60 has a specific electrode array structure defined by at least part of the cathode 20 and at least part of the anode 40 as shown in Fig. 1B. More specifically, the cathode parts 22 as the part of the cathode 20 and the anode parts 42 as the part of the anode 40 form the specific electrode array structure.

It is preferable that the specific electrode array structure evenly distributes both the cathode parts 22 and the anode parts 42. In one suitable example of the electrode array structure shown in Fig. 1B, the multiple cathode parts 22 are arranged in a zigzag pattern in the solid electrolyte layer 60. Namely the cathode parts 22 are arrayed zigzag on two columns to be alternately diagonal in the moving direction of the respective columns. The multiple anode parts 42 are similarly arranged in a zigzag pattern on the solid electrolyte layer 60. The zigzag patterns of both the cathode parts 22 and the anode parts 42 form an array structure of alternately arranging the cathode parts 22 and the anode parts 42 both in the vertical direction and in the lateral direction as shown in Fig. 1B. Namely the cathode parts 22 and the anode parts 42 are arranged alternately in the structure of this embodiment. The number of the cathode parts 22 or the number of the anode parts 42 in the zigzag arrangement is preferably at least ten / cm², more preferably more than several tens / cm², or most preferably more than several hundreds / cm².

As shown in Fig. 1A, the cathode parts 22 and the anode parts 42 are mutually offset to have different center axes in the laminating direction of the all-solid battery element 10. The offset arrangement effectively prevents the local reduction in thickness of the solid electrolyte layer 60 and the potential short circuit.

The cathode parts 22 and the anode parts 42 having the offset arrangement are preferably arrayed to have at least partial overlap in thickness in the laminating direction of the all-solid battery element 10.
The cathode parts 22 and the anode parts 42 are mutually nested in the opposed spaces in the laminating direction of the all-solid battery element 10. This arrangement effectively increases the contact area of the cathode 20 and the anode 40 with the solid electrolyte layer 60 without increasing the total thickness of the all-solid battery element 10. This nested structure desirably reduces the thickness of the solid electrolyte layer 60 interposed between the cathode 20 and the anode 40, the thickness of the electrode-solid electrolyte assembly 70, and the total thickness of the all-solid battery element 10.

This offset arrangement desirably attains the cell functions on the respective side faces of the cathode parts 22 and the anode parts 42.
Namely each adjoining pair of the cathode part 22 and the anode part 42 arrayed in the electrode-solid electrolyte assembly 70 functions as a cell in the direction perpendicular to the laminating direction of the all-solid battery element 10. In the all-solid battery element 10 of this embodiment, the cathode 20 and the anode 40 respectively have the cathode layer 24 and the anode layer 44. The combination of the cathode parts 22 and the opposed anode layer 44 and the combination of the anode parts 42 and the opposed cathode layer 24 also attain the cell functions. This arrangement ensures the enhanced output of the all-solid battery element 10.

The cathode parts 22 and the anode parts 42 are preferably arranged to form a matrix in the solid electrolyte layer 60. In the illustrated example of Fig. 1B, the elements of the matrix, that is, the cathode parts 22 and the anode parts 42, are arrayed in 'm' columns in the lateral direction and in 'n' rows in the vertical direction. The matrix of the cathode parts 22 and the anode parts 42 further effectively increases the contact area of the respective electrodes 20 and 40 with the solid electrolyte layer 60.

Fig. 1A and Fig 1B show a typical example of the array structure of the cathode parts 22 and the anode parts 42. In the illustrated array structure, the cathode parts 22 and the anode parts 42 have a zigzag pattern array structure respectively and form a matrix as the whole in the solid electrolyte layer 60. The cathode parts 22 and the anode parts 42 are located alternately both in the vertical direction and in the lateral direction. As a result the cathode parts 22 and the anode parts 42 form a checkered pattern array structure.

As described above, the all-solid battery element 10 of this embodiment has the specific array structure of arranging the cathode parts 22 and the anode parts 42 in a zigzag manner respectively and alternative manner and an alternate manner to form a checkered pattern. This arrangement effectively increases the contact area of the respective electrodes 20 and 40 with the solid electrolyte layer 60. The solid electrolyte layer 60 is thus designed to have the cavities for receiving the cathode parts 22 and the anode parts 42 in this specific array structure. This arrangement desirably enhances the output of the all solid battery element 10. This specific array structure in the electrode-solid electrolyte assembly 70 desirably decreases the thickness of the solid electrolyte layer 60 interposed between the cathode 20 and the anode 40, thus reducing the internal resistance. The specific array structure of the cathode parts 22 and the anode parts 42 in the all-solid battery element 10 of this embodiment exerts these advantages without complicating the overall structure of the all-solid battery element 10.

In the all-solid battery element 10 of the embodiment, the solid electrolyte layer 60 has the concavo-convex structure to form the cavities for receiving the cathode parts 22 and the anode parts 42 therein. Even when the thickness of the solid electrolyte layer 60 and the overall thickness of the electrode-solid electrolyte assembly 70 are reduced for the enhanced ion conductivity, this concavo-convex structure ensures the following advantages:
(1) preventing the decreases of strength and rigidity;
(2) preventing the occurrence of cracks; as a result of (1) and (2), the solid electrolyte layer 60 ensure the advantages of following:
(3) ensuring the enhanced ion conductivity;
(4) preventing a short circuit or any other local trouble or failure due to the occurrence of a crack; and
(5) reducing the internal impedance by the increased contact area of the respective electrodes with the solid electrolyte layer.

### (Laminated All-Solid Battery Element)

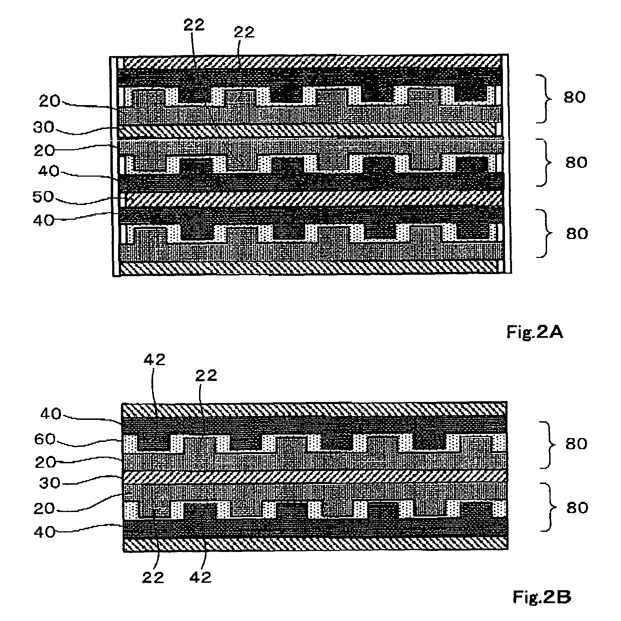

In the illustrated example of Fig. 1A and Fig.1B, the all-solid battery element 10 has only one unit cell 80 including the cathode 20, the anode 40, and the solid electrolyte layer 60. Multiple unit cells 80 may be laminated to construct a laminated all-solid battery element as shown in Fig. 2A and Fig.2B. In one example of Fig. 2A, the multiple unit cells 80 are laminated such that the cathodes 20 have plane symmetry across the cathode collectors 30 and that the anodes 20 have plane symmetry across the anode collectors 50 in the laminated all-solid battery element. In the laminated all-solid battery element of this arrangement, adjacent unit cells in the laminating direction are readily connectable in parallel. The laminate structure of Fig. 2A enables power collection from the respective sides of the cathode collectors 30 and the anode collectors 50.

Laminated all-solid battery element may be formed by the lamination of the multiple unit cells 80 via suitable conductive materials.
In this manufacturing process of laminated all-solid battery element, the multiple unit cells 80 are connected in series.

In another example of Fig. 2B, the multiple unit cells 80 are laminated such that the cathode parts 22 of two cathodes 20 piled across the cathode collector 30 are arranged zigzag in the laminating direction and that the anode parts 42 of two anodes 40 opposed to the respective cathodes 20 are arranged zigzag in the laminating direction. The zigzag arrangement of the cathode parts 22 and the anode parts 42 in the laminating direction relieves the internal stress in the charging and discharging process- In this laminated all-solid battery element, the cathode parts 22 and the anode parts 42 are arranged alternately in the laminating direction. In the illustrated example of Fig. 2B, the two cathodes 20 are piled across the cathode collector 30. The laminated all-solid battery element may have a structure of piling two anodes 40 across the anode collector 50 or may have a combined structure of the cathode piling and the anode piling.

The laminated all-solid battery element having the multiple unit cells 80 laminated to form the electrode array structure in the zigzag pattern in the laminating direction has the increased degree of freedom in electrical connection between the unit cells 80. The laminated all-solid battery element of this arrangement adopts any suitable electrical connection and readily satisfies any output demand.

### (Manufacturing Process of All-Solid Battery Element)

One manufacturing process of the all-solid battery element 10 in the first embodiment is described with reference to Figs. 3 to 6.

### (Preparation of Solid Electrolyte Layer)

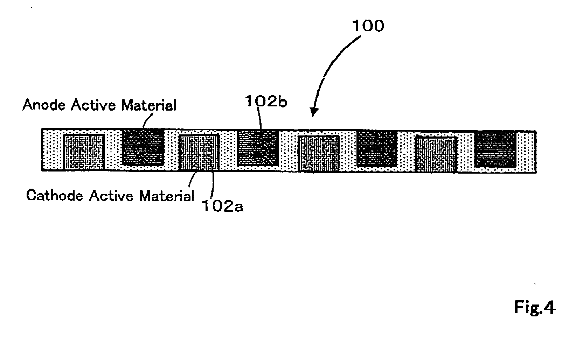

A solid electrolyte body 100 for the solid electrolyte layer 60 is prepared at first. The solid electrolyte body 100 has cavities 102a and 102b respectively receiving the supply of a cathode active material and the supply of an anode active material to form the at least part of the cathode 20 as the cathode parts 22 and the at least part of the anode 40 as the anode parts 42 as shown in Figs. 4. The solid electrolyte body 100 may be prepared by molding a solid electrolyte material or by physically or chemically processing a preform of a specific shape.

Fig. 3 shows a process of preparing the solid electrolyte body 100 having the cavities 102a and 102b by laminating three solid electrolyte sheets (for example, non-sintered ceramic green sheets) 110, 120, and 130. The first solid electrolyte sheet 110 has holes 112 in an mxn matrix. The cathode parts 22 and the anode parts 42 are eventually formed in these holes 112.

The second solid electrolyte sheet 120 has holes 122 corresponding to the positions and the dimensions of the cathode parts 22 of the cathode 20 in the all-solid battery element 10. The third solid electrolyte sheet 130 has holes 132 corresponding to the positions and the dimensions of the anode parts 42 of the anode 40 in the all-solid battery element 10. Lamination of these three solid electrolyte sheets 110, 120, and 130 forms the solid electrolyte body 100 having the cavities 102a open on one plane for receiving the cathode parts 22 therein and the cavities 102b open on the other plane for receiving the anode parts 42 therein. This completes the solid electrolyte layer 60 of the all-solid battery element 10.

The procedure of preparing each of the solid electrolyte sheets 110, 120, and 130 in the solid electrolyte body 100 is mixing and kneading a solid electrolyte material with a binder (for example, polyvinylidene fluoride or styrene butadiene rubber) and a solvent (N-methylpyrrolidone or water) to make slurry, applying the slurry to a required thickness on a carrier sheet by screen printing or by doctor blade method, and removes the carrier sheet. The respective solid electrolyte sheets 110, 120, and 130 are sintered at an adequate timing according to the combination of the solid electrolyte material with cathode and anode active materials by considering the sintering temperature and the rate of sintering-induced shrinkage. One available method is sintering the laminate of the solid electrolyte sheets 110, 120, and 130 and subsequently forms a cathode and an anode on the laminate. This method does not require adjustment of the sintering temperature suitable for the solid electrolyte material to the sintering temperature suitable for the cathode and anode active materials and thus allows a wide range of selection for the combination of the solid electrolyte material and the cathode and anode active materials. This method also prevents crimps of the solid electrolyte sheets from being peeled off by means of a solvent included in a slurry of the cathode active material or the anode active material in the course of filling the cathode active material or the anode active material.

### (Formation of Cathode and Anode)

Slurries of the cathode active material and the anode active material are supplied zigzag or alternately to the cavities 102a and 102b of the solid electrolyte body 100. These slurries may be supplied by any suitable technique, for example, dipping, ejection, injection, or any of various printing techniques. Fig. 4 shows the cavities 102a and 102b of the solid electrolyte body 100 respectively filled with the cathode active material and with the anode active material. This forms the cathode parts 22 and the anode parts 42 in the corresponding cavities 102a and 102b.

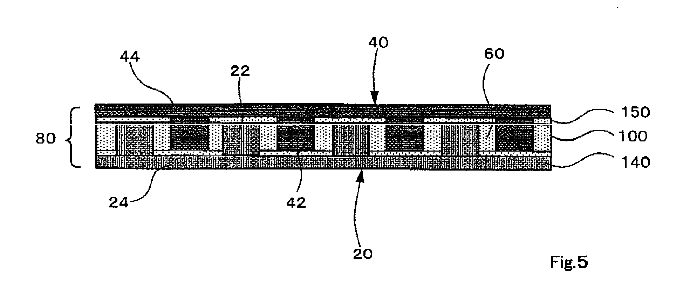

A cathode layer 140 and an anode layer 150 are then formed on the opposed planes of the solid electrolyte body 100 as shown in Fig. 5. The cathode layer 140 is obtained by applying a green sheet of the cathode active material or printing the cathode active material on the plane of the solid electrolyte body 100 with the open cavities 102a. The anode layer 150 is obtained by applying a green sheet of the anode active material or printing the anode active material on the plane of the solid electrolyte body 100 with the open cavities 102b. The formation of the cathode layer 140 and the anode layer 150 may be performed simultaneously with the supplies of the cathode active material and the anode active material into the cavities 102a and 102b. The cathode layer 140 and the anode layer 150 respectively form the cathode layer 24 of the cathode 20 and the anode layer 44 of the anode 40. This completes the unit cell 80.

### (Formation of Collectors)

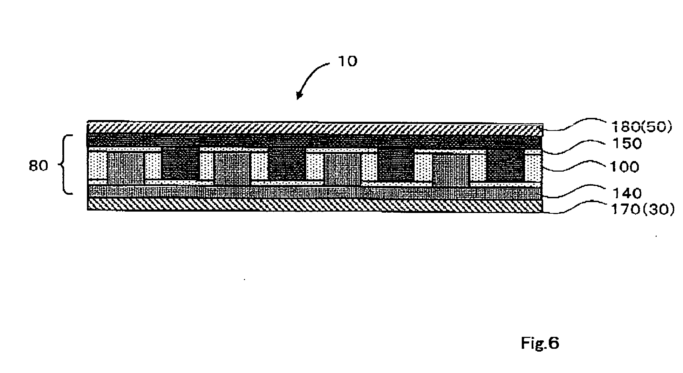

A cathode collector layer 170 and an anode collector layer 180 are then respectively formed outside the cathode layer 140 and the anode layer 150 as shown in Fig. 6. These collector layers 170 and 180 are obtained by applying collector sheets or by printing a collector material. The cathode collector layer 170 and the anode collector layer 180 form the cathode collector 30 and the anode collector 50 of the solid electrolyte battery element 10. This completes the solid electrolyte battery element 10.

When the materials are resistant to sintering, the respective material layers may be sintered at multiple steps in the manufacturing process, that is, after formation of the solid electrolyte body 100, after formation of the cathode layer 140 and the anode layer 150, and after formation of the cathode collector layer 170 and the anode collector layer 180. When the materials are resistant to co-sintering, two or more material layers may be sintered simultaneously. For example, all the material layers may be sintered simultaneously after formation of the cathode collector layer 170 and the anode collector layer 180. The respective material layers may be integrated by the thermal compression technique. The sintering conditions may be set suitably for the combination of the respective materials.

Lamination of the unit cells 80 thus procedure gives the laminated all-solid battery element as shown in Fig. 2.

The cathode collector 170(30) and the anode collector 180 (50) are connected to metal terminals of corresponding external electrodes by a conductive paste. The whole assembly is covered with a resin coat, for example, by the dipping technique. This completes the chargeable and dischargeable all-solid battery element 10.

The manufacturing process of the first embodiment prepares in advance the solid electrolyte body 100 with the cavities 102a and 102b respectively receiving the supply of the cathode active material and the supply of the anode active material to form the at least part of the cathode 20 as the cathode parts 22 and the at least part of the anode 40 as the anode parts 42. This readily makes the specific array structure of arranging the cathode parts 22 and the anode parts 42 in a zigzag manner or in an alternate manner. Formation of the cavities 102a and 102b enables easy charging of the respective active materials and ensures easy and accurate formation of the projected cathode parts 22 and the projected anode parts 42. The manufacturing process of the first embodiment thus readily forms the zigzag or alternate electrode array structure.

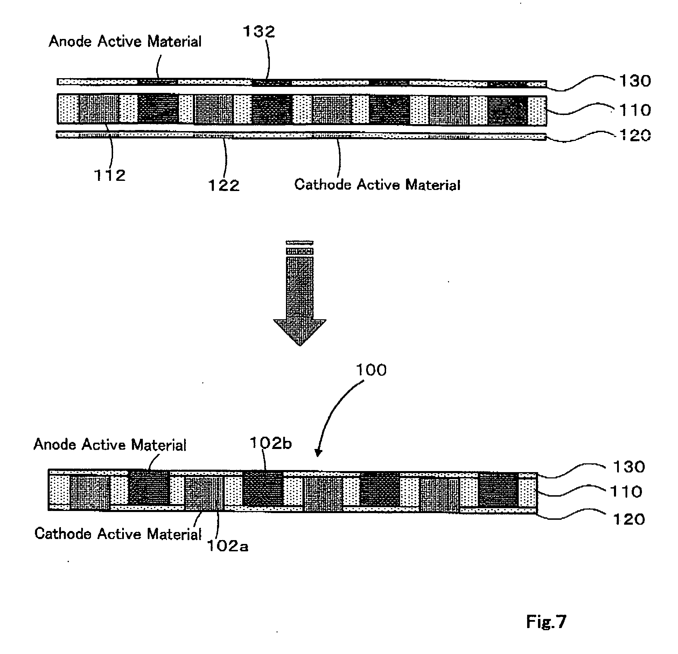

The manufacturing process of this embodiment prepares in advance the solid electrolyte body 100 with the cavities 102a and 102b and subsequently fills these cavities 102a and 102b with the supplies of the cathode active material and the anode active material to make a zigzag or alternate electrode array structure. This manufacturing process is, however, not restrictive. One modified manufacturing process shown in Fig. 7 charges the supplies of the cathode active material and the anode active material into the respective holes 112, 122, and 132 of the first through the third solid electrolyte sheets 110, 120, and 130 to give a desired array structure and subsequently integrates the three solid electrolyte sheets 110, 120, and 130.

### (Second Embodiment)

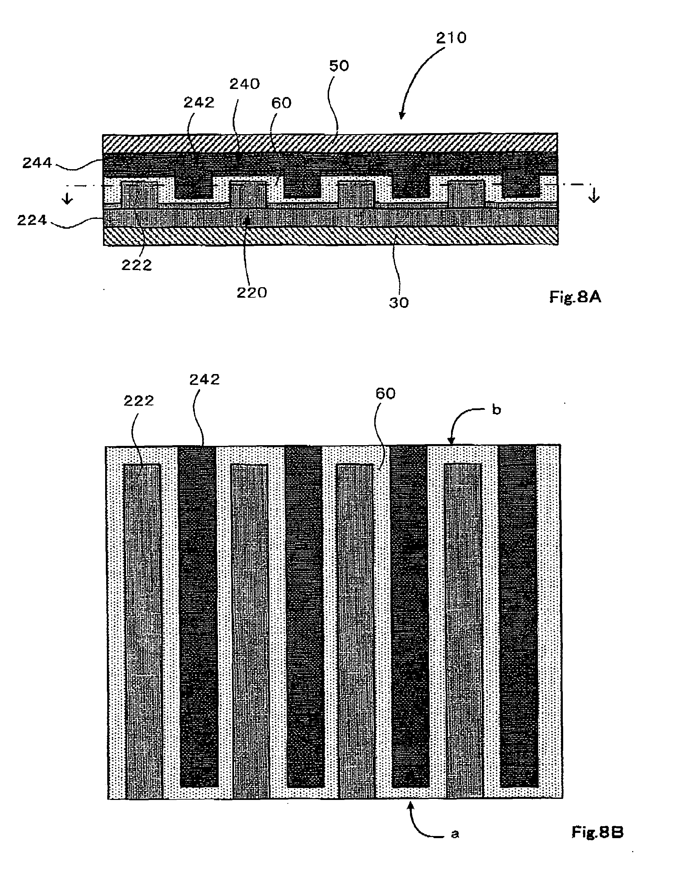

An all solid battery element 210 in a second embodiment of the invention is described with reference to Figs. 8 through 12. The like constituents to those of the first embodiment are expressed by the like numerals. The all-solid battery element 210 of the second embodiment has a specific electrode array structure where at least part of a cathode 220 and at least part of an anode 240 are arranged not zigzag but simply in an alternate manner. One example of the electrode array structure is shown in Fig. 8A and Fig. 8B. In the electrode array structure of Fig. 8A and Fig. 8B, band-like cathode parts 222 and band-like anode parts 242 are arranged alternately and parallel to each other in the solid electrolyte layer 60. Namely the solid electrolyte layer 60 has cavities for receiving the cathode bands 222 and the anode bands 242 alternately. This arrangement desirably attains the cell functions in a direction perpendicular to the laminating direction of the all-solid battery element 210. Like the all-solid battery element 10 of the first embodiment, in the all-solid battery element 210 of the second embodiment, the cathode 220 and the anode 240 respectively have a cathode layer 224 and an anode layer 244. The combination of the cathode parts 222 and the opposed anode layer 244 and the combination of the anode parts 242 and the opposed cathode layer 224 also attain the cell functions.

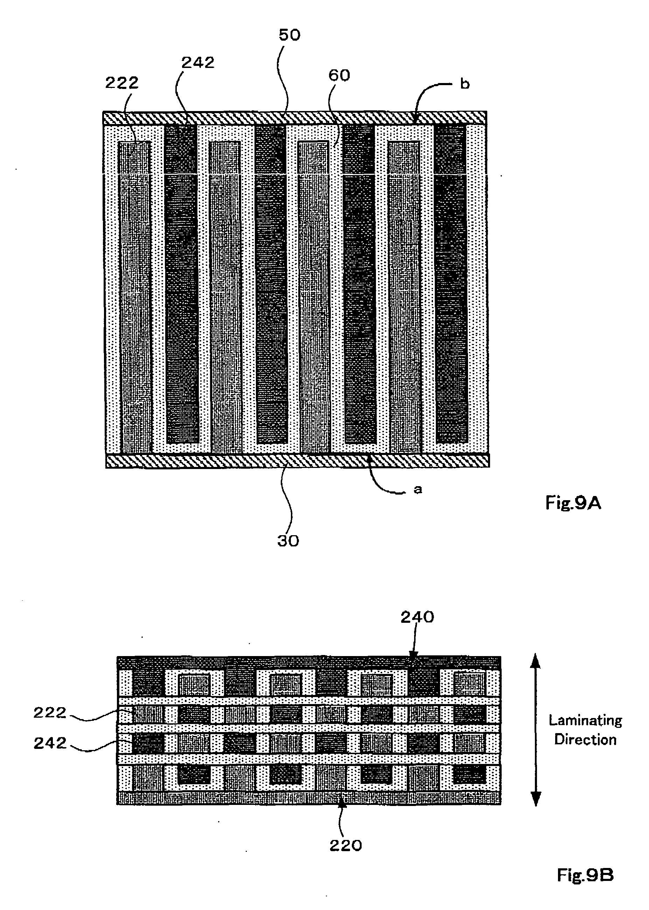

As shown in Fig. 8B, in the alternate arrangement of the cathode bands 222 and the anode bands 242 in the solid electrolyte layer 60, the cathode bands 222 preferably have respective one ends exposed to one side face 'a' of the solid electrolyte layer 60 and respective other ends sealed on the other side face 'b' of the solid electrolyte layer 60. Similarly, the anode bands 242 preferably have respective one ends exposed to the side face 'b' of the solid electrolyte layer 60 and respective other ends sealed on the side face 'a' of the solid electrolyte layer 60. Further attachment of the cathode collector 30 on the side face 'a' and the anode collector 50 on the side face 'b' enables power collection from the sides of the solid electrolyte layer 60 as shown in Fig. 9A. In a laminated all-solid battery element, the cathode layers 224 and the anode layers 244 may be omitted from middle unit cells (see Fig. 9B).

In the laminated all-solid battery element of Fig. 9B, alternate lamination of the cathode parts 222 and the anode parts 242 in the laminating direction enables location of collectors on side faces and omission of inner collectors and outer most collectors. This arrangement desirably attains the size reduction of the laminated all-solid battery element. In the laminated all-solid battery element of Fig. 9B, the cathode parts 222 and the anode parts 242 are arranged in a zigzag pattern. This arrangement desirably relieves the internal stress in the charging and discharging process.

The specifications of the cathode 20 and the anode 40 described in the first embodiment except the electrode array structure are applicable to the cathode 220 including the cathode parts 242 and the anode 240 including the anode parts 244.

### (Manufacturing Process of Laminated All-Solid Battery Element)

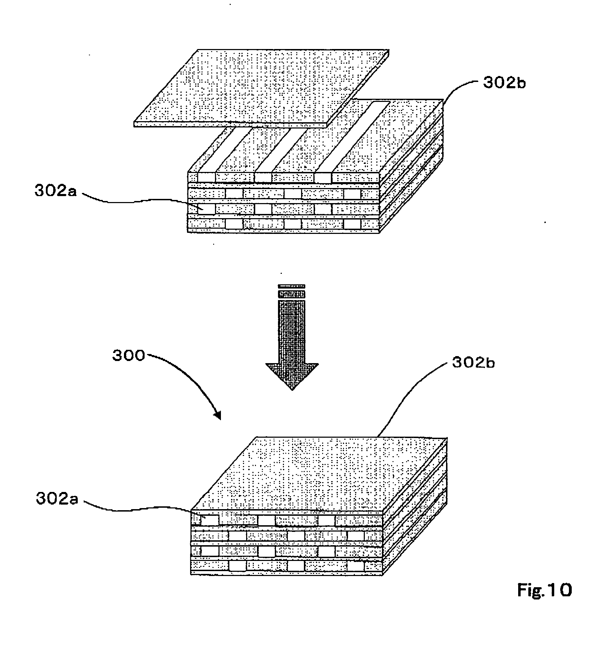

One manufacturing process of the laminated all-solid battery element of Fig. 9B in the second embodiment is described with reference to Figs. 10 to 12.

### (Preparation of Solid Electrolyte Layers)

A lamination of solid electrolyte bodies 300 for the solid electrolyte layers 60 is prepared at first. The solid electrolyte body 300 has cavities 302a and 302b that are open on opposed side faces for receiving the supply of a cathode active material and the supply of an anode active material to form the cathode bands 222 and the anode bands 242 as shown in Fig. 10. The solid electrolyte body 300 may be obtained by lamination of multiple solid electrolyte sheets as described in the first embodiment, by cutting, by perforating, or by screen printing.

### (Formation of Cathodes and Anodes)

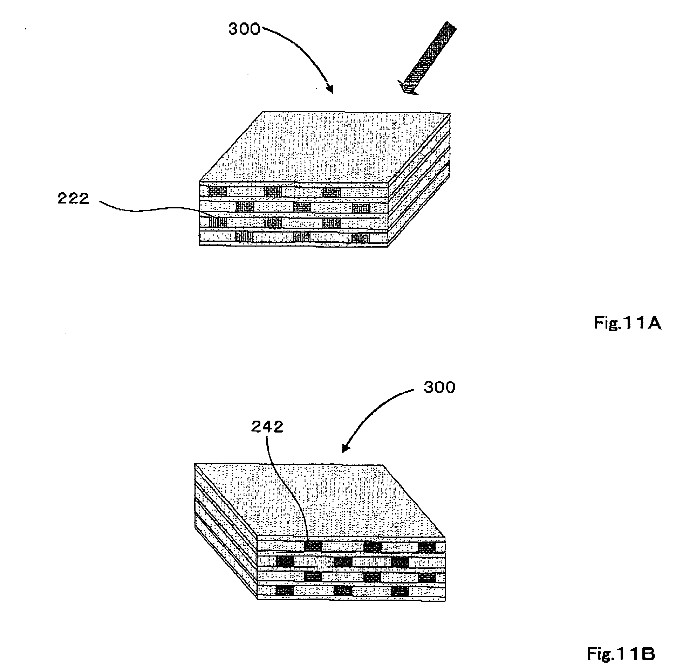

The supplies of the cathode active material and the anode active material are then charged into the respective cavities 302a and 302b to form the cathode bands 222 and the anode bands 242 alternately both in the laminating direction and in the direction perpendicular to the laminating direction. Fig. 11A and Fig. 11B shows the cavities 302a and 302b of the solid electrolyte bodies 300 filled with the supplies of the cathode active material and the anode active material.

### (Formation of Collectors)

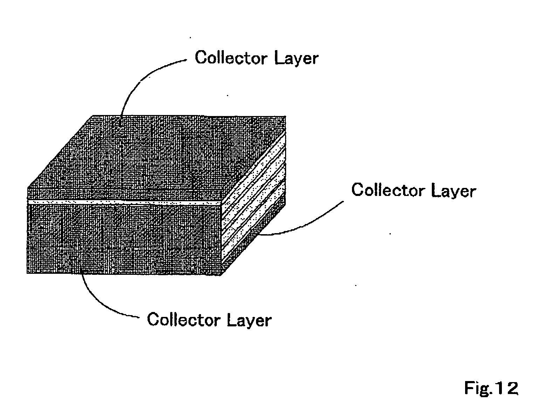

After formation of a cathode layer and an anode layer on the bottom plane and the top plane in the laminate of the solid electrolyte bodies 300, collector layers are further formed outside the cathode layer and the anode layer as shown in Fig. 12. Collector layers are also formed on the side planes with the exposed cathode bands 222 and the exposed anode bands 242 in the laminate of the solid electrolyte bodies 300. The collectors are connected to metal terminals of corresponding external electrodes by a conductive paste. The whole assembly is then covered with a resin coat, for example, by the dipping technique. This completes the chargeable and dischargeable laminated all-solid battery element of the second embodiment.

This manufacturing process of the laminated all-solid battery element is only illustrative and is not restrictive in any sense. The processing details and the processing sequence in each step of the manufacturing process and the sequence of the steps in the manufacturing process may be changed and modified according to the requirements. For example, when the solid electrolyte material and the cathode and anode active materials are resistant to co-sintering, all the material layers formed by the screen printing technique or by the sheet lamination technique may be sintered simultaneously.

### (Third Embodiment)

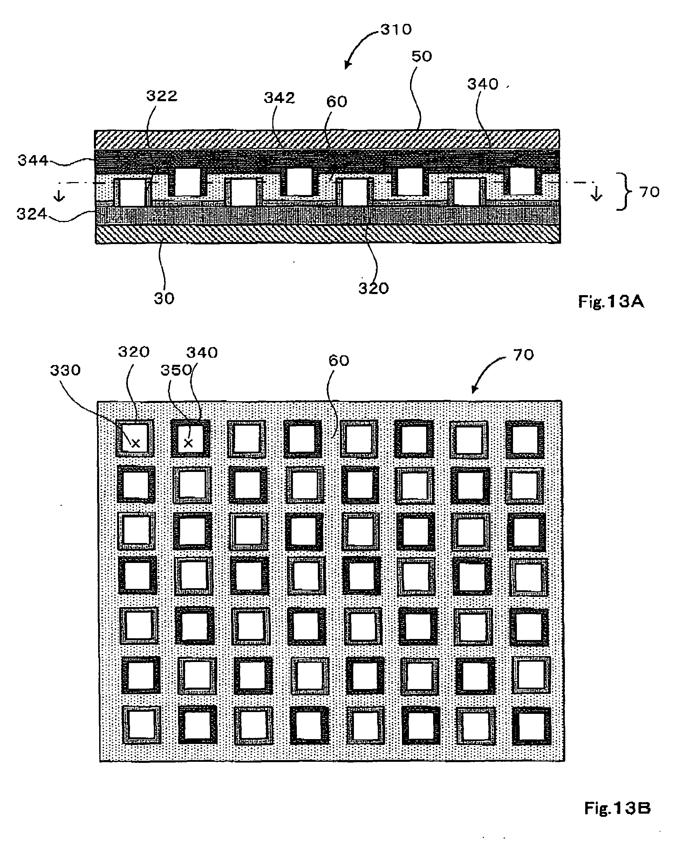

An all-solid battery element 310 in a third embodiment of the invention is described with reference to Fig. 13A and Fig.13B. The like constituents to those of the first embodiment are expressed by the like numerals. In the all-solid battery element 310 of the third embodiment, at least part of a cathode 320 and at least part of an anode 340 forming a specific electrode array structure have hollow spaces in the solid electrolyte layer 60. One example of the electrode array structure is shown in Fig. 13. The electrode array structure of this embodiment formed in the solid electrolyte layer 60 has cathode parts 322 as the part of the cathode 320 protruded into the solid electrolyte layer 60 and anode parts 342 as the part of the anode 340 protruded into the solid electrolyte layer 60.

The cathode parts 322 and the anode parts 342 respectively have hollow spaces 330 and 350. The hollow spaces 330 and 350 of the cathode parts 322 and the anode parts 342 may be open to communicate with an adjacent layer, for example, the solid electrolyte layer 60 or the collectors 30 and 50, or may be closed in the cathode 320 and the anode 340. In the structure of the hollow spaces 330 and 350 open to the adjacent layer, the respective cathode parts 322 and anode parts 342 may be formed as cylinders or other bottomed containers. When the electrodes 320 and 340 are made of significantly thin electrode active materials, the cathode parts 322 and the anode parts 342 are formed as outer coats, rather than having the hollow spaces 330 and 350. In the all-solid battery element 310 of the third embodiment, the specific array structure of the hollow or outer-coat cathode parts 322 and anode parts 342 reduces the area of low charging and discharging efficiencies apart from the solid electrolyte material, thus effectively improving the rate characteristic and enhancing the output of the all-solid battery element 310 per unit weight. This arrangement also desirably relieves expansion and contraction of the electrode active materials in the course of charging and discharging. The specifications of the electrodes described in the first embodiment or in the second embodiment may be applied to the electrodes 320 and 340 having the hollow or outer-coat cathode parts 322 and anode parts 342 in the third embodiment. The outer shapes and the contours of the respective electrodes having the hollow or outercoat cathode parts and anode parts may be identical with any of those described in the first embodiment or with the bar shape of the second embodiment. The electrode array structure of the third embodiment may be identical with any of those described in the first embodiment or with the electrode array structure of the second embodiment. The laminated structures of the first and the second embodiment are also applicable to the all-solid battery element 310 of the third embodiment.

The all-solid battery element 310 of the third embodiment is manufactured according to the manufacturing process of the first embodiment with some modification. The cathode and anode formation step applies the respective electrode active materials on the inner walls of the cavities 102a and 102b to leave hollow spaces inside the cavities 102a and 102b, instead of filling the cavities 102a and 102b of the solid electrolyte body 100 with the electrode active materials.

The embodiments discussed above are to be considered in all aspects as illustrative and not restrictive. There may be many modifications, changes, and alterations without departing from the scope or spirit of the main characteristics of the present invention. For example, the embodiments regard application of the all-solid battery element of the invention to flat secondary batteries as laminates of flat electrode layers and flat electrolyte layers. The technique of the invention is applicable to batteries of other suitable shapes, for example, a cylindrical shape and a rod shape.

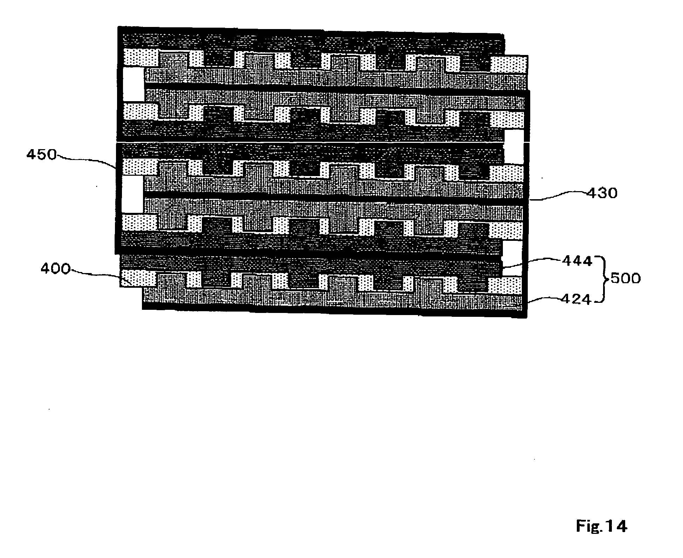

In the all-solid battery elements of the above embodiments, the cathode layer and the anode layer have no level difference on an end face of the solid electrolyte layer. This is, however, not restrictive in any sense.
In one modified structure of Fig. 14, each pair of a cathode layer 424 and an anode layer 444 has a level difference 500 on an end face of a solid electrolyte layer 400- The level difference 500 enables easy power collection from respective one electrode layers, that is, the cathode layers 424, protruded on one end face of the solid electrolyte layer 400 by a cathode collector 430, while enabling easy power collection from respective other electrode layers, that is, the anode layers 444, protruded on the other end face of the solid electrolyte layer 400 by an anode collector 450. This multilevel electrode structure on the end faces of the solid electrolyte layer 400 is especially advantageous for power collection from end faces in a laminate of multiple unit cells. In the laminate of multiple unit cells, the respective unit cells are disposed to have the level differences 500 and to make respective one electrode layers, for example, the cathode layers 424, protruded on one end face of the solid electrolyte layers 400 and respective other electrode layers, for example, the anode layers 444, protruded on the other end face of the solid electrolyte layers 400. This arrangement enables simultaneous power collection from all the cathode layers 424 at one end in the laminate of unit cells and simultaneous power collection from all the anode layers 444 at the other end in the laminate of unit cells. This simple structure facilitates power collection from the laminate of unit cells.

The zigzag or alternate array structure characteristic of the present invention is not restricted to the all-solid battery element but may be adopted in diversity of other applications. For example, this specific array structure may be applied to capacitors having electrodes of metal lithium or carbon material. The array structure of the hollow or outer-coat electrode parts as described in the third embodiment may be adopted for a liquid electrolyte. The structure of the third embodiment may be applied for a reactor in fuel cells.

## Claims

1. An all-solid battery element having at least one unit cell,
the unit cell comprising:
a cathode having a cathode active material;
an anode having an anode active material; and
a solid electrolyte layer that is in contact with both the cathode and the anode;
wherein the solid electrolyte layer has cavities for receiving at least part of the cathode and at least part of the anode, in order to allow formation of a specific array structure of arranging the at least part of the cathode and the at least part of the anode in an alternate manner.

2. The all-solid battery element in accordance with claim 1, wherein the solid electrolyte layer has the cavities, in order to allow formation of a specific band pattern array structure of arranging the at least part of the cathode and the at least part of the anode in an alternate manner and parallel to each other.

3. The all-solid battery element in accordance with claim 1, wherein the solid electrolyte layer has the cavities, in order to allow formation of a specific zigzag pattern array structure of arranging the at least part of the cathode and the at least part of the anode in a zigzag pattern respectively.

4. The all-solid battery element in accordance with claim 3, wherein the solid electrolyte layer has the cavities, in order to allow formation of a specific matrix array structure of arranging the at least part of the cathode and the at least part of the anode in a checkered pattern and as a matrix on the whole.

5. The all solid battery element in accordance with any one of claim 1 to 4, wherein the cathode has multiple cathode parts forming the specific array structure and a cathode layer,
the anode has multiple anode parts forming the specific array structure and an anode layer, and
the cathode layer and the anode layer are arranged to face each other across the solid electrolyte layer.

6. The all-solid battery element in accordance with any one of claim 1 to 5, wherein at least either of the cathode and the anode has a hollow space.

7. The all-solid battery element in accordance with any one of claim 1 to 6, wherein the cathode and the anode have different levels on an end face of the solid electrolyte layer.

8. The all-solid battery element in accordance with any one of claim 1 to 7, wherein two or a greater number of the unit cells are laminated to form a cell laminate, and
the cell laminate has the at least part of the cathode and the at least part of the anode that form the specific array structure and are arranged in an alternate manner or in a zigzag manner respectively in a laminating direction of the respective unit cells.

9. The all-solid battery element in accordance with claim 8, wherein the two or more unit cells are laminated such that at least either of the cathodes and the anodes have plane symmetry across a collector in the laminating direction of the unit cells.

10. A solid electrolyte for an all-solid battery element having a cathode and an anode;
wherein the solid electrolyte has cavities for receiving at least part of the cathode and at least part of the anode, in order to allow formation of a specific array structure of arranging the at least part of the cathode and the at least part of the anode in an alternate manner.
